# EUROPEAN PATENT SPECIFICATION

(11) **EP 4 321 901 B1**
(45) Date of publication and mention of the grant of the patent: **24.12.2025**
(21) Application number: 22189955.2
(22) Date of filing: 11.08.2022
(51) Int. Cl.: G01S 13/56, G01S 13/04, G01S 13/70, G01S 13/62

(54) **TARGET DETECTION METHOD AND SYSTEM**
ZIELDETEKTIONSVERFAHREN UND -SYSTEM
PROCÉDÉ ET SYSTÈME DE DÉTECTION DE CIBLE

(43) Date of publication of application: 14.02.2024
(73) Proprietor: NXP B.V., 5656 AG Eindhoven (NL)
(72) Inventor: TERTINEK, Stefan, 5656AG Eindhoven (NL); SPIESS, Bernhard, 5656AG Eindhoven (NL)
(74) Representative: Krott, Michel

(56) References cited:
- EROL BARIS ET AL: "Range information for reducing fall false alarms in assisted living", 2016 IEEE RADAR CONFERENCE (RADARCONF), IEEE, 2 May 2016 (2016-05-02), pages 1 - 6, XP032909007, DOI: 10.1109/RADAR.2016.7485176
- KABBINALE ANIRUDDH RAO ET AL: "Framework to ascertain effectiveness of Ultra-Wideband for In-home device control", 2022 IEEE WIRELESS COMMUNICATIONS AND NETWORKING CONFERENCE (WCNC), IEEE, 10 April 2022 (2022-04-10), pages 1713 - 1718, XP034123507, DOI: 10.1109/WCNC51071.2022.9771747
- CHAKRABORTY ABHIRAM ET AL: "A Low-Power 24-GHz Radar Transceiver for Automotive Hands-Free Trunk Opener Applications in a 0.13 m SiGe BiCMOS Technology", 2021 18TH EUROPEAN RADAR CONFERENCE (EURAD), EUROPEAN MICROWAVE ASSOCIATION (EUMA), 5 April 2022 (2022-04-05), pages 529 - 532, XP034131204, DOI: 10.23919/EURAD50154.2022.9784474

## Description

### TECHNICAL FIELD

The present disclosure relates to a method of detecting a target. Furthermore, the present disclosure relates to a corresponding computer program, and to a corresponding target detection system.

### BACKGROUND

Ultra-wideband (UWB) communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e. for determining the distance between communicating devices. Therefore, UWB technology may be used to advantage in various applications, such as automotive applications. Furthermore, UWB technology may be used for sensing movements of external objects, such as human beings. For instance, a vehicle may be equipped with a UWB-based radar sensor near the trunk, to detect a kicking movement which may be indicative of a user's intention to open said trunk.

The article "Range information for reducing fall false alarms in assisted living", written by Baris Erol et al. and published at the IEEE Radar Conference (RadarConf) in 2016, demonstrates reductions in fall false alarm rates exploiting radar-based range information compared to Doppler only processing, by using experimental data from two different ultra-wideband (UWB) radars operating different carrier frequencies as well as data from a Kinect-based UWB pulse-Doppler radar simulator.

The article "Framework to ascertain effectiveness of Ultra-Wideband for In-home device control", written by Aniruddh Rao Kabbinale et al. and published at the IEEE Wireless Communications and Networking Conference (WCNC) in 2022, describes an evaluation framework to ascertain the effectiveness of UWB for in-home device control, and help in improving the user experience. In the context of in-home device control, a set of three use cases is chosen to explore challenges and evaluate the value of using UWB for detecting user intent based on the distance and angle measurements obtained by performing ranging.

### SUMMARY

In accordance with a first aspect of the present disclosure, a method of detecting a target is conceived, as defined in claim 1.

In one or more embodiments, the first detection unit and the second detection unit are implemented by the same device.

In one or more embodiments, performing the UWB radar operation comprises transmitting one or more radar signals to a monitored area and receiving reflections of said radar signals.

In one or more embodiments, the first detection output is generated based on a result of analyzing the reflections of the radar signals.

In one or more embodiments, determining said distances comprises collecting ranging data for a predefined amount of time and deriving the distances from said ranging data.

In one or more embodiments, the second detection output is generated based on the determined distances between the second detection unit and the external UWB-enabled communication device.

In one or more embodiments, the second detection output is further indicative of whether the second target remains within a predefined area for a given amount of time.

**In** one or more embodiments, generating the first detection output and/or generating the second detection output is carried out by a machine learning algorithm.

**In** accordance with a second aspect of the present disclosure, a computer program is provided, comprising executable instructions which, when executed by a first detection unit, a second detection unit and a processing unit, carry out a method of the kind set forth.

**In** accordance with a third aspect of the present disclosure, a target detection system is provided, as defined in claim 10.

**In** one or more embodiments, the first detection unit and the second detection unit are implemented by the same device.

In one or more embodiments, the processing unit is integrated into the first detection unit or into the second detection unit.

### DESCRIPTION OF DRAWINGS

Embodiments will be described in more detail with reference to the appended drawings.
Fig. 1A shows an example of a true positive target detection.
Fig. 1B shows an example of a false positive target detection.
Fig. 2 shows an illustrative embodiment of a method of detecting a target.
Fig. 3 shows an illustrative embodiment of a target detection system.
Fig. 4A shows radar measurements for a kick movement.
Fig. 4B shows radar measurements for a walking movement.
Fig. 5A shows the distance to a key fob for a kick movement.
Fig. 5B shows the distance to a key fob for a walking movement.

### DESCRIPTION OF EMBODIMENTS

As mentioned above, UWB technology enables a high data throughput for communication devices and a high precision for the localization of devices. In particular, UWB technology may be used for so-called ranging operations, i.e., for determining the distance between communicating devices. Therefore, UWB technology may be used to advantage in various applications, such as automotive applications. Furthermore, UWB technology may be used for sensing movements of external objects (i.e., targets), such as human beings. For instance, a vehicle may be equipped with a UWB-based radar sensor near the trunk, to detect a kicking movement which may be indicative of a user's intention to open said trunk.

In UWB-based smart access systems a radar sensor can assist a UWB ranging device to make an access procedure more convenient for a user. For example, for an easy-trunk-access use case (i.e., a so-called "kick sensor"), a vehicle may operate a radar sensor behind the rear bumper and automatically open the trunk when detecting that a user performs a kicking motion towards the sensor and when detecting that a legitimate key fob is within the vehicle's proximity, based on an authorization procedure and distance bounding.

In general, a radar sensor comprises a detection algorithm which processes radar echoes from the environment and decides whether a target is present or not, for example by checking if the signal level in a certain range-Doppler cell exceeds a threshold. However, the detection process may result in so-called false alarms (i.e., false positive detections), meaning that the detection algorithm decides that a target is present when in fact it is not.

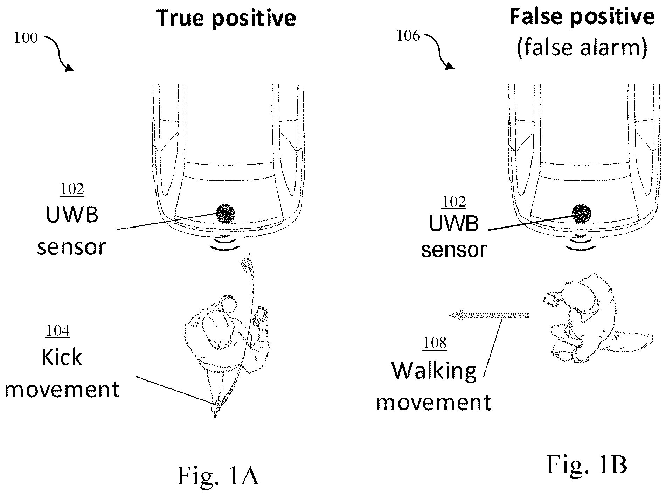

**Figs. 1A and 1B** show examples of a true positive target detection 100 and a false positive target detection 106, respectively. In case of the true positive target detection 100, a person kicks 104 towards the UWB sensor 102, signalizing the intent to open the trunk. When the detection algorithm decides to open the trunk, a true positive target detection 100 has occurred. However, as shown in Fig. 1B, the person may also simply walk 108 past the UWB sensor 102, with no intent to open the trunk. In that case, when the detection algorithm decides to open the trunk, a false positive target detection 106 has occurred. Thus, similar target movements may lead to similar radar echoes, which in turn may lead to false alarms raised by the detection algorithm. In practice, false alarms can reduce the user experience, such as opening the trunk when there was no intent by a user to do so.

Now discussed are a method of detecting a target, a corresponding computer program and a corresponding target detection system, which facilitate reducing the likelihood of false positive target detections.

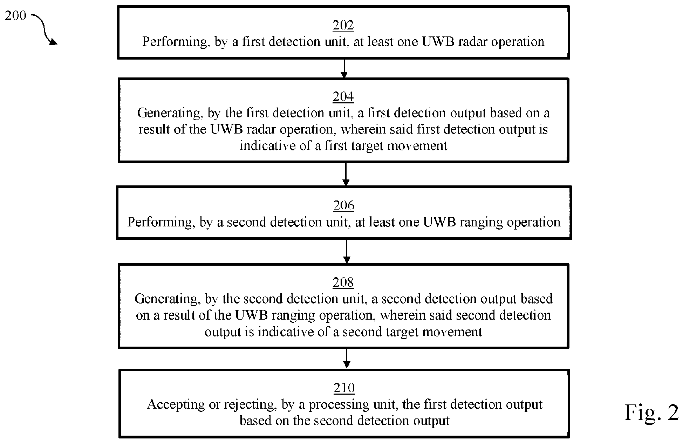

**Fig. 2** shows an illustrative embodiment of a method 200 of detecting a target. At 202, a first detection unit performs at least one UWB radar operation. Furthermore, at 204, the first detection unit generates a first detection output based on a result of the UWB radar operation, wherein said first detection output is indicative of a first target movement. Furthermore, at 206, a second detection unit performs at least one UWB ranging operation. Furthermore, at 208, the second detection unit generates a second detection output based on a result of the UWB ranging operation, wherein said second detection output is indicative of a second target movement. Finally, at 210, a processing unit accepts or rejects the first detection output based on the second detection output. By using the result of a UWB ranging operation to accept or reject a detection output obtained by performing a UWB radar operation, the likelihood of false positive target detections may be reduced.

In particular, a false alarm is an erroneous decision about the presence of a radar target when in fact no valid target is present. The presently disclosed method may mitigate false alarms in a UWB radar system as used for the detection of target movements (e.g., false alarms raised by a kick sensor). The presently disclosed method may be based on the idea that a first target movement is detected in a UWB radar mode, that a second target movement is detected in a UWB ranging mode, and finally that the detected second target movement (which has been derived from ranging data), is used to accept or reject the detected first target movement (which has been derived from radar data).

In one or more embodiments, the first detection unit and the second detection unit are implemented by the same device. In other words, the UWB radar operation and the UWB ranging operation, and the steps of generating the first detection output and the second detection output, are performed by a single device that implements two functional units. In this way, the system cost may be reduced. In particular, this single device may be a UWB device that is capable of operating in a radar mode as well as in a ranging mode. Alternatively, the first detection unit and the second detection unit may be implemented by different devices. In a practical implementation, performing the UWB radar operation comprises transmitting one or more radar signals to a monitored area and receiving reflections of said radar signals. Furthermore, in a practical implementation, the first detection output is generated based on a result of analyzing the reflections of the radar signals. In other words, the first detection output may be generated based on a result of analyzing the echoes of the radar signals. Furthermore, in a practical implementation, performing the UWB ranging operation comprises determining distances between the second detection unit and an external UWB-enabled communication device.

In one or more embodiments, determining the distances between the second detection unit and the external UWB-enabled communication device comprises collecting ranging data for a predefined amount of time and deriving the distances from said ranging data. By collecting ranging data for a predefined amount of time, it may be ensured that sufficient ranging data are available for accepting or rejecting the detected first target movement. Furthermore, in a practical implementation, the second detection output is generated based on the determined distances between the second detection unit and the external UWB-enabled communication device.

Performing the UWB ranging operation comprises performing a single-sided two-way ranging, SS-TWR, operation or a double-sided two-way ranging, DS-TWR, operation. By performing a SS-TWR or DS-TWR operation, an accurate distance measurement may be performed. In one or more embodiments, the second detection output is further indicative of whether the second target remains within a predefined area for a given amount of time. In this way, the decision to accept or reject the detected first target movement may be made more reliable. For instance, the predefined area may be a perimeter around the trunk of a vehicle. In that case, after a potential kick has been detected, it may be checked if a user remains within said perimeter, and the detected first target movement may be accepted (i.e., regarded as a true positive target detection) only if said user remains within the perimeter. Furthermore, in one or more embodiments, generating the first detection output and/or generating the second detection output is carried out by a machine learning algorithm. The use of a machine learning algorithm may increase the accuracy of the detection.

UWB technology - also referred to as impulse-radio ultra-wideband (IR-UWB) - is a RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method.

Because UWB technology has an accurate distance measurement capability, it may be used to advantage in access systems in which the position of devices should be determined to enable access to an object. For instance, a vehicle access system may comprise a user's smart device (e.g., key fob) and another smart device (e.g., an anchor embedded in the vehicle). To enable access to the vehicle, the user's smart device must have a predefined range relative to the other smart device. Therefore, UWB transceivers are typically configured to operate in a ranging mode. In another example, UWB technology may be used for accessing a building or a predefined space within a building.

In the ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). The angle-of-arrival (AoA) mode of operation is similar to the ranging mode, but it involves at least two antennas on one device. In particular, in the AoA mode of operation, two phase values associated with at least two CIRs are calculated on one device. Then, a phase difference of arrival (PDoA) is calculated based on the two-phase values, and an AoA is calculated based on the PDoA. The AoA mode of operation may facilitate a more accurate determination of the position of an object and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation.

In the radar mode of operation, frames are transmitted by at least one device and those frames are received by the same device and/or by one or more other devices. Then, the CIRs are estimated on the device or devices receiving the frames, and the range and/or velocity and/or AoA are calculated based on the estimated CIRs. The radar mode of operation may be used to advantage to detect (i.e., sense) the presence of objects or human beings. However, the radar mode of operation may also be used to estimate a distance, although with a lower accuracy than the ranging mode of operation will typically achieve. The skilled person will appreciate that the given examples are non-limiting examples of how the different modes of operation can be implemented. In other words, the modes may be implemented differently, depending on the requirements imposed by the application, for example.

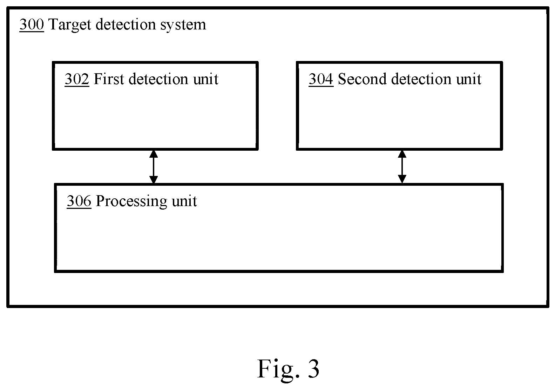

**Fig. 3** shows an illustrative embodiment of a target detection system 300. The target detection system 300 comprises a first detection unit 302, a second detection 304 and a processing unit 306. It is noted that, although the first detection unit 302 and the second detection unit 304 have been shown as separate units, they may be integrated with each other, resulting in a single detection unit. Furthermore, although the processing unit 306 has been shown as a separate unit, it may be integrated with the first detection unit 302, with the second detection unit 304 or with the single detection unit, as the case may be. The first detection unit 302 is configured to perform at least one UWB radar operation and to generate a first detection output based on a result of the UWB radar operation, wherein said first detection output is indicative of a first target movement. Furthermore, the second detection unit 304 is configured to perform at least one UWB ranging operation and to generate a second detection output based on a result of the UWB ranging operation, wherein said second detection output is indicative of a second target movement. Finally, the processing unit 306 is configured to accept or reject the first detection output based on the second detection output.

In a more detailed implementation of the presently disclosed method, the following steps may be performed. First, radar data may be collected by operating a detection unit in a UWB radar mode. More specifically, radar data may be collected by transmitting a UWB radar signal to a monitored area and receiving the reflections (i.e., echoes). Then, the collected radar data may be processed in order to detect a first target movement, which indicates the presence of a potential target in the monitored area. A target movement may for example be a gesture performed by a person (e.g., a kicking movement or hand gesture), or a person entering or leaving the monitored area (e.g., a perimeter around a smart lock). Next, ranging data may be collected by operating another detection unit, or the same detection unit, in a UWB ranging mode. More specifically, ranging data may be collected by one or more UWB responders (e.g., anchor nodes in a vehicle) which continuously communicate with an initiator (e.g., a smart key fob). The ranging data may for example include the distances of a key fob to each UWB responder. In practice, a UWB chip may be reconfigured from a radar mode to a ranging mode, reusing the same hardware for the detection of target movements. Thus, a UWB responder which acts as the second detection unit in accordance with the present disclosure, may also act as the first detection unit by operating in a radar mode, before it is reconfigured to the ranging mode. Alternatively, a dedicated UWB radar sensor may be used as the first detection unit, while the UWB responder merely acts as the second detection unit. It is noted that the ranging data may be collected over period of time (e.g., a few seconds) in order to obtain information about the user movement after a detected first target movement. Next, the ranging data may be processed to detect the second target movement. Finally, the detected first target movement may either be accepted or rejected based on the detected second target movement. For example, it may be assumed that a decision algorithm determines that a first target movement can be derived from the radar data. If the algorithm then determines that a second target movement can also be derived from the ranging data, then the overall decision may be to accept the first target movement as a valid detected target movement.

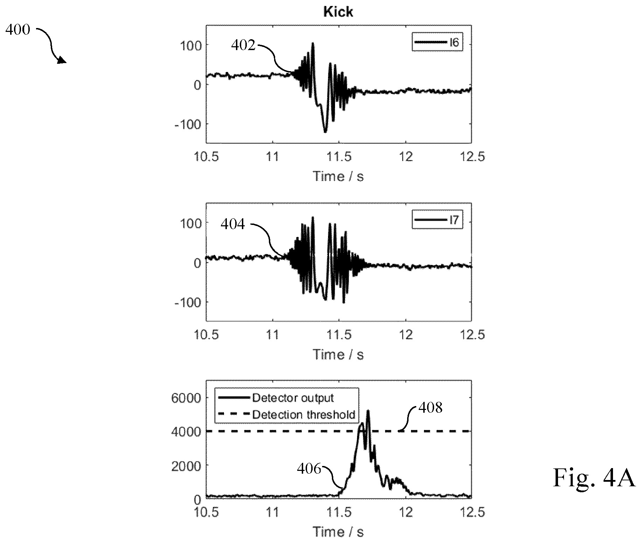

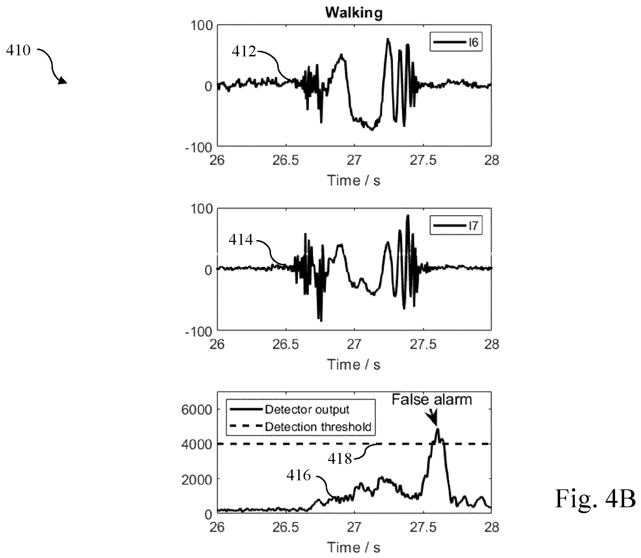

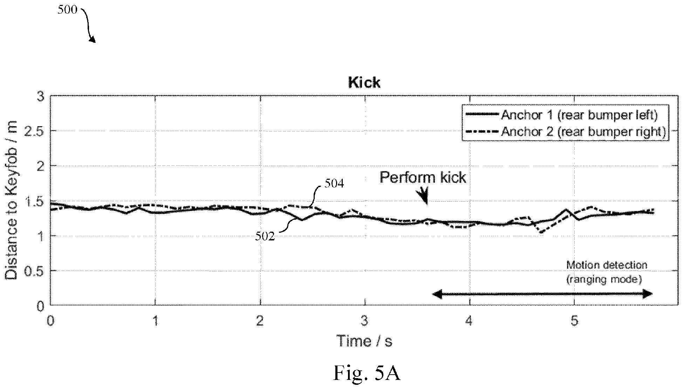

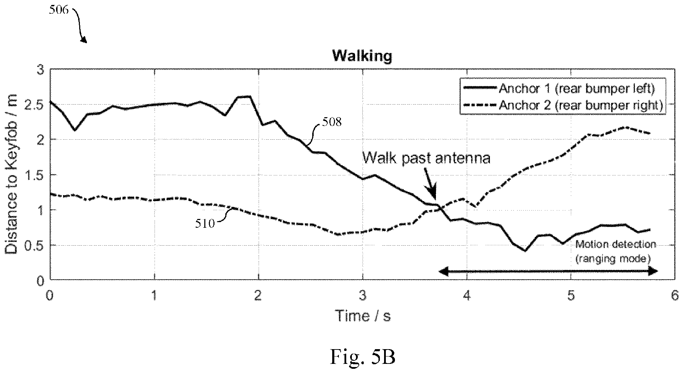

It is noted that first target movement and the second target movement do not need to be similar or be compared with each other. In other words, the goal is to detect a first target movement (radar data), detect a second target movement (ranging data), and then accept the first detected target movement if the second detected target movement meets a specific detection criterion, without having to compare the two movements. An example is shown in Figs. 4A, 4B, 5A and 5B. In this example, UWB operating in radar mode looks at the IQ data and detects a valid kick as a first target movement (Fig. 4A shows only I data). By contrast, UWB operating in ranging mode looks at the distance/ranging data (no IQ) and detects a valid movement as one where the criterion is "the distance must remain within a certain bound after a potential kick has been detected", which corresponds to the person basically moving a little after the kick. It is noted that in this example there is no comparison between the two movements.

**Figs. 4A** **and** **4B** show radar measurements for a kick movement 400 and radar measurements for a walking movement 410, respectively. In particular, radar I-channel signals are shown at the range bins 90 cm ("I6") and 105 cm ("I7") as well as the output of a matched filter detector, whose coefficients are matched to the IQ signal of a "standard kick". It is noted that I7 means the "I" (in-phase) part of the 7th range bin, where one range bin equals 15 cm. Thus, I7 corresponds to 7*15 = 105 cm, and I6 corresponds to 6*15 = 90 cm. It can be seen that due to the similarity of the IQ signals of kick and the walking movements, the matched filter output exceeds a predefined detection threshold in both cases, leading to a false alarm for the walking movement. The threshold cannot be optimized without impacting the false alarm.

**Figs. 5A** **and** **5B** show the distance to a key fob for a kick movement 500 and the distance to a key fob for a walking movement 506. In particular, it can be seen how the measured distances for a kick movement are sufficiently different from the measured distances for a walking movement, so that these distances (i.e., ranging data) can effectively be used to accept or reject a kick movement derived from radar data. Thus, the false alarm shown in Fig. 4B can be detected and mitigated by performing a movement detection using UWB ranging data. In this implementation, the target detection system contains a UWB radar device (i.e., radar sensor) in the middle of the rear bumper of a car, two UWB ranging devices (i.e., anchors) on either end of the rear bumper, and one UWB ranging device (key fob) on the user's side. After the radar sensor detects a potential kick, the system may activate the two anchors to continuously measure the distance to the key fob over a period of time and the radar sensor may be switched off. However, the system may also reconfigure the radar sensor as a ranging device to obtain an additional distance measurement and make the detection of the second target movement more accurate. Finally, the system may even configure all three car-side devices first in a radar mode and then in a ranging mode. In particular, for a kick movement the distance between the key fob and the two anchors remains fairly constant over time after the kick, which is due to limited motion of the user. In contrast, for a walking movement, the distance to the two anchors changes over time, with the user approaching the rear right bumper, walking past the antenna of the radar sensor (at which point the distance between the key fob and both anchors is the same) and finally moving away from the rear right bumper. A false kick is detected when walking past the sensor between the two anchors, because the distances to the key fob measured by the two anchors start to deviate from each other, indicating a significant movement of the user.

In another implementation, no separate radar sensor may be provided in the middle of the bumper, and the two anchors on the ends of the bumper may be first configured in a radar mode and then, after a potential kick has been detected, be reconfigured into a ranging mode. In yet another implementation, there may be only one stationary UWB device, which is first configured in a radar mode and then, after the detection, reconfigured into a ranging mode. In this implementation, the UWB device may simply check, when operating in a ranging mode, if the moving UWB device (i.e., the external UWB-enabled communication device) is within the range of a circle.

In an implementation of the presently disclosed method, a control unit in a vehicle may check if, after a potential kick has been detected, the user's motion remains within a certain perimeter around the trunk for a given time duration, opening the trunk only if the user remains within the perimeter. In another implementation the detection of the first and/or the second target movement may be performed using a machine learning (ML) model. Prior to its use, the ML model may be trained based on a large amount of data collected from different people performing the required target movements (e.g., first performing a kick and moving a little after the kick, and then walking past the radar sensor from different directions). It is noted that the presently disclosed method and system may also be used in applications other than kick detection, such as hand gesture detection and passenger or occupancy detection in a vehicle.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described.

### LIST OF REFERENCE SIGNS

- 100: true positive target detection
- 102: UWB sensor
- 104: kick movement
- 106: false positive target detection
- 108: walking movement
- 200: method of detecting a target
- 202: performing, by a first detection unit, at least one UWB radar operation
- 204: generating, by the first detection unit, a first detection output based on a result of the UWB radar operation, wherein said first detection output is indicative of a first target movement
- 206: performing, by a second detection unit, at least one UWB ranging operation
- 208: generating, by the second detection unit, a second detection output based on a result of the UWB ranging operation, wherein said second detection output is indicative of a second target movement
- 210: accepting or rejecting, by a processing unit, the first detection output based on the second detection output
- 300: target detection system
- 302: first detection unit
- 304: second detection unit
- 306: processing unit
- 400: radar measurements for a kick movement
- 402: I-channel signal at a first range bin
- 404: I-channel signal at a second range bin
- 406: detector output
- 408: detection threshold
- 410: radar measurements for a walking movement
- 412: I-channel signal at a first range bin
- 414: I-channel signal at a second range bin
- 416: detector output
- 418: detection threshold
- 500: distance to a key fob for a kick movement
- 502: distance measured by a first anchor (rear bumper left)
- 504: distance measured by a second anchor (rear bumper right)
- 506: distance to a key fob for a walking movement
- 508: distance measured by a first anchor (rear bumper left)
- 510: distance measured by a second anchor (rear bumper right)

## Claims

1. A method (200) of detecting a target, comprising:
performing (202), by a first detection unit, at least one ultra-wideband, UWB, radar operation;
generating (204), by the first detection unit, a first detection output based on a result of the UWB radar operation, wherein said first detection output is indicative of a first target movement;
performing (206), by a second detection unit, at least one UWB ranging operation;
generating (208), by the second detection unit, a second detection output based on a result of the UWB ranging operation, wherein said second detection output is indicative of a second target movement;
accepting or rejecting (210), by a processing unit, the first detection output based on the second detection output;
**characterized in that** performing (206) the UWB ranging operation comprises determining distances between the second detection unit and an external UWB-enabled communication device, wherein performing (206) the UWB ranging operation comprises performing a single-sided two-way ranging, S S-TWR, operation or a double-sided two-way ranging, DS-TWR, operation.

2. The method (200) of claim 1, wherein the first detection unit and the second detection unit are implemented by the same device.

3. The method (200) of claim 1 or 2, wherein performing (202) the UWB radar operation comprises transmitting one or more radar signals to a monitored area and receiving reflections of said radar signals.

4. The method (200) of claim 3, wherein the first detection output is generated based on a result of analyzing the reflections of the radar signals.

5. The method (200) of any preceding claim, wherein determining said distances comprises collecting ranging data for a predefined amount of time and deriving the distances from said ranging data.

6. The method (200) of any preceding claim, wherein the second detection output is generated (208) based on the determined distances between the second detection unit and the external UWB-enabled communication device.

7. The method (200) of any preceding claim, wherein the second detection output is further indicative of whether the second target remains within a predefined area for a given amount of time.

8. The method (200) of any preceding claim, wherein generating the first detection output and/or generating the second detection output is carried out by a machine learning algorithm.

9. A computer program comprising executable instructions which, when executed by a first detection unit, a second detection unit and a processing unit, carry out the method (200) of any preceding claim.

10. A target detection system (300), comprising:
a first detection unit (302) configured to perform at least one ultra-wideband, UWB, radar operation and to generate a first detection output based on a result of the UWB radar operation, wherein said first detection output is indicative of a first target movement;
a second detection unit (304) configured to perform at least one UWB ranging operation and to generate a second detection output based on a result of the UWB ranging operation, wherein said second detection output is indicative of a second target movement;
a processing unit (306) configured to accept or reject the first detection output based on the second detection output;
**characterized in that** performing the UWB ranging operation comprises determining distances between the second detection unit and an external UWB-enabled communication device, wherein performing (206) the UWB ranging operation comprises performing a single-sided two-way ranging, SS-TWR, operation or a double-sided two-way ranging, DS-TWR, operation.

11. The system (300) of claim 10, wherein the first detection unit (302) and the second detection unit (304) are implemented by the same device.

12. The system (300) of claim 10 or 11, wherein the processing unit (306) is integrated into the first detection unit (302) or into the second detection unit (304).

## Patentansprüche

1. Verfahren (200) zum Detektieren eines Ziels, das Folgendes umfasst:
Durchführen (202), durch eine erste Detektionseinheit, mindestens eines Ultrabreitband-Radarvorgangs, UWB-Radarvorgangs;
Erzeugen (204), durch die erste Detektionseinheit, einer ersten Detektionsausgabe basierend auf einem Ergebnis des UWB-Radarvorgangs, wobei die erste Detektionsausgabe eine erste Zielbewegung angibt;
Durchführen (206), durch eine zweite Detektionseinheit, mindestens eines UWB-Entfernungsmessungsvorgangs;
Erzeugen (208), durch die zweite Detektionseinheit, einer zweiten Detektionsausgabe basierend auf einem Ergebnis des UWB-Entfernungsmessungsvorgangs, wobei die zweite Detektionsausgabe eine zweite Zielbewegung angibt;
Annehmen oder Ablehnen (210), durch eine Verarbeitungseinheit, der ersten Detektionsausgabe basierend auf der zweiten Detektionsausgabe;
**dadurch gekennzeichnet, dass** das Durchführen (206) des UWB-Entfernungsmessungsvorgangs das Bestimmen von Abständen zwischen der zweiten Detektionseinheit und einer externen UWB-fähigen Kommunikationsvorrichtung umfasst, wobei das Durchführen (206) des UWB-Entfernungsmessungsvorgangs das Durchführen eines einseitigen Zweiwege-Entfernungsmessungsvorgangs, SS-TWR-Vorgangs, oder eines zweiseitigen Zweiwege-Entfernungsmessungsvorgangs, DS-TWR-Vorgangs, umfasst.

2. Verfahren (200) nach Anspruch 1, wobei die erste Detektionseinheit und die zweite Detektionseinheit durch dieselbe Vorrichtung implementiert werden.

3. Verfahren (200) nach Anspruch 1 oder 2, wobei das Durchführen (202) des UWB-Radarvorgangs das Übertragen eines oder mehrerer Radarsignale zu einem überwachten Bereich und das Empfangen von Reflexionen der Radarsignale umfasst.

4. Verfahren (200) nach Anspruch 3, wobei die erste Detektionsausgabe basierend auf einem Ergebnis des Analysierens der Reflexionen der Radarsignale erzeugt wird.

5. Verfahren (200) nach einem der vorhergehenden Ansprüche, wobei das Bestimmen der Abstände das Sammeln von Entfernungsmessungsdaten für eine vordefinierte Zeitdauer und das Ableiten der Abstände aus den Entfernungsmessungsdaten umfasst.

6. Verfahren (200) nach einem der vorhergehenden Ansprüche, wobei die zweite Detektionsausgabe basierend auf den bestimmten Abständen zwischen der zweiten Detektionseinheit und der externen UWB-fähigen Kommunikationsvorrichtung erzeugt wird (208).

7. Verfahren (200) nach einem der vorhergehenden Ansprüche, wobei die zweite Detektionsausgabe ferner angibt, ob das zweite Ziel für eine gegebene Zeitdauer innerhalb eines vordefinierten Bereichs bleibt.

8. Verfahren (200) nach einem der vorhergehenden Ansprüche, wobei das Erzeugen der ersten Detektionsausgabe und/oder das Erzeugen der zweiten Detektionsausgabe durch einen Maschinenlernalgorithmus durchgeführt werden/wird.

9. Computerprogramm, das ausführbare Anweisungen umfasst, die, wenn sie durch eine erste Detektionseinheit, eine zweite Detektionseinheit und eine Verarbeitungseinheit ausgeführt werden, das Verfahren (200) nach einem der vorhergehenden Ansprüche durchführen.

10. Zieldetektionssystem (300), das Folgendes umfasst:
eine erste Detektionseinheit (302), die dazu ausgelegt ist, mindestens einen Ultrabreitband-Radarvorgang, UWB-Radarvorgang, durchzuführen und eine erste Detektionsausgabe basierend auf einem Ergebnis des UWB-Radarvorgangs zu erzeugen, wobei die erste Detektionsausgabe eine erste Zielbewegung angibt;
eine zweite Detektionseinheit (304), die dazu ausgelegt ist, mindestens einen UWB-Entfernungsmessungsvorgang durchzuführen und eine zweite Detektionsausgabe basierend auf einem Ergebnis des UWB-Entfernungsmessungsvorgangs zu erzeugen, wobei die zweite Detektionsausgabe eine zweite Zielbewegung angibt;
eine Verarbeitungseinheit (306), die dazu ausgelegt ist, die erste Detektionsausgabe basierend auf der zweiten Detektionsausgabe anzunehmen oder abzulehnen;
**dadurch gekennzeichnet, dass** das Durchführen des UWB-Entfernungsmessungsvorgangs das Bestimmen von Abständen zwischen der zweiten Detektionseinheit und einer externen UWB-fähigen Kommunikationsvorrichtung umfasst, wobei das Durchführen (206) des UWB-Entfernungsmessungsvorgangs das Durchführen eines einseitigen Zweiwege-Entfernungsmessungsvorgangs, SS-TWR-Vorgangs, oder eines zweiseitigen Zweiwege-Entfernungsmessungsvorgangs, DS-TWR-Vorgangs, umfasst.

11. System (300) nach Anspruch 10, wobei die erste Detektionseinheit (302) und die zweite Detektionseinheit (304) durch dieselbe Vorrichtung implementiert sind.

12. System (300) nach Anspruch 10 oder 11, wobei die Verarbeitungseinheit (306) in die erste Detektionseinheit (302) oder in die zweite Detektionseinheit (304) integriert ist.

## Revendications

1. Procédé (200) de détection d'une cible, comprenant :
l'exécution (202), par une première unité de détection, d'au moins une opération de radar ultra-large bande, UWB ;
la génération (204), par la première unité de détection, d'une première sortie de détection sur la base d'un résultat de l'opération de radar UWB, ladite première sortie de détection étant indicative d'un premier mouvement cible ;
l'exécution (206), par une deuxième unité de détection, d'au moins une opération de télémétrie UWB ;
la génération (208), par la deuxième unité de détection, d'une deuxième sortie de détection sur la base d'un résultat de l'opération de télémétrie UWB, ladite deuxième sortie de détection étant indicative d'un deuxième mouvement cible ;
l'acceptation ou le rejet (210), par une unité de traitement, de la première sortie de détection sur la base de la deuxième sortie de détection ;
**caractérisé en ce que** l'exécution (206) de l'opération de télémétrie UWB comprend la détermination de distances entre la deuxième unité de détection et un dispositif de communication externe à fonctionnalité UWB, l'exécution (206) de l'opération de télémétrie UWB comprenant l'exécution d'une opération de télémétrie bidirectionnelle unilatérale, SS-TWR, ou une opération de télémétrie bidirectionnelle bilatérale, DS-TWR.

2. Procédé (200) selon la revendication 1, dans lequel la première unité de détection et la deuxième unité de détection sont mises en œuvre par le même dispositif.

3. Procédé (200) selon la revendication 1 ou 2, dans lequel l'exécution (202) de l'opération de radar UWB comprend la transmission d'un ou plusieurs signaux radar vers une zone surveillée et la réception de réflexions desdits signaux radar.

4. Procédé (200) selon la revendication 3, dans lequel la première sortie de détection est générée en fonction d'un résultat d'analyse des réflexions des signaux radar.

5. Procédé (200) selon l'une quelconque des revendications précédentes, dans lequel la détermination desdites distances comprend la collecte de données de télémétrie pour une quantité de temps prédéfinie et l'obtention des distances à partir desdites données de télémétrie.

6. Procédé (200) selon l'une quelconque des revendications précédentes, dans lequel la deuxième sortie de détection est générée (208) sur la base des distances déterminées entre la deuxième unité de détection et le dispositif de communication externe à fonctionnalité UWB.

7. Procédé (200) selon l'une quelconque des revendications précédentes, dans lequel la deuxième sortie de détection est en outre indicative du fait que la deuxième cible reste ou non dans une zone prédéfinie pendant une quantité de temps donnée.

8. Procédé (200) selon l'une quelconque des revendications précédentes, dans lequel la génération de la première sortie de détection et/ou la génération de la deuxième sortie de détection est exécutée par un algorithme d'apprentissage automatique.

9. Programme informatique comprenant des instructions exécutables qui, lorsqu'elles sont exécutées par une première unité de détection, une deuxième unité de détection et une unité de traitement, exécutent le procédé (200) selon l'une quelconque des revendications précédentes.

10. Système de détection de cible (300), comprenant :
une première unité de détection (302) configurée pour exécuter au moins une opération de radar ultra-large bande, UWB, et pour générer une première sortie de détection en fonction d'un résultat de l'opération de radar UWB, ladite première sortie de détection étant indicative d'un premier mouvement cible ;
une deuxième unité de détection (304) configurée pour exécuter au moins une opération de télémétrie UWB et pour générer une deuxième sortie de détection en fonction d'un résultat de l'opération de télémétrie UWB, ladite deuxième sortie de détection étant indicative d'un deuxième mouvement cible ;
une unité de traitement (306) configurée pour accepter ou rejeter la première sortie de détection sur la base de la deuxième sortie de détection ;
**caractérisé en ce que** l'exécution de l'opération de télémétrie UWB comprend la détermination de distances entre la deuxième unité de détection et un dispositif de communication externe à fonctionnalité UWB, l'exécution (206) de l'opération de télémétrie UWB comprenant l'exécution d'une opération de télémétrie bidirectionnelle unilatérale, SS-TWR, ou une opération de télémétrie bidirectionnelle bilatérale, DS-TWR.

11. Système (300) selon la revendication 10, dans lequel la première unité de détection (302) et la deuxième unité de détection (304) sont mises en œuvre par le même dispositif.

12. Système (300) selon la revendication 10 ou 11, dans lequel l'unité de traitement (306) est intégrée dans la première unité de détection (302) ou dans la deuxième unité de détection (304).
